# FASCICULE DE BREVET EUROPEEN

(11) **EP 0 459 907 B1**
(45) Date de publication et mention de la délivrance du brevet: **28.12.1994**
(21) Numéro de dépôt: 91401409.7
(22) Date de dépôt: 30.05.1991
(51) Int. Cl.: B29C 53/56, B29C 67/00

(54) **Procédé pour la réalisation de tubes minces en résine fluorée notamment en polytétrafluoréthylène**
Verfahren zum Herstellen dünnwandiger Röhren aus fluoriertem Harz, insbesondere Polytetrafluoräthylen
Method for manufacturing thin-walled tubes of fluorinated resin, particularly polytetrafluoroethylene

(30) Priorité: 30.05.1990 FR 9006723
(43) Date de publication de la demande: 04.12.1991
(73) Titulaire: COMPAGNIE PLASTIC OMNIUM Société Anonyme dite:, 69007 Lyon (FR)
(72) Inventeur: Moret de Rocheprise, Bernard, F-52600 Chalindrey (FR)
(74) Mandataire: Leszczynski, André

(56) Documents cités:
- DE-B- 1 175 422
- FR-A- 2 218 987
- US-A- 3 089 187
- US-A- 4 898 702

## Description

La présente invention est relative à un procédé pour la fabrication de tubes en résine fluorée, notamment en polytétrafluoréthylène, (PTFE), de faible épaisseur.

Le procédé selon la présente invention est du type décrit dans le brevet FR-A-2 218 987 de la société déposante, et comprend les étapes consistant à enrouler sur un mandrin un ruban de résine fluorée, notamment de PTFE, cru, obtenu notamment par extrusion lubrifiée et calandrage, l'enroulement du ruban étant effectué selon une pluralité de couches, à porter le ruban ainsi enroulé sur le mandrin à une température supérieure à la température de gélification de la résine fluorée pendant un temps suffisant pour provoquer la gélification, à refroidir le tube et le mandrin, et à extraire le mandrin situé à l'intérieur du tube.

Les tubes ainsi obtenus peuvent notamment être utilisés comme gaines de revêtement intérieur de tubes métalliques, comme cela est notamment décrit dans le brevet FR-A-2 292 175 de la société déposante.

Le procédé décrit précédemment pour réaliser des tubes, notamment en PTFE, donne satisfaction lorsque l'épaisseur des tubes formés doit être de l'ordre de 3 mm ou plus, notamment pour des tubes destinés à former des gaines résistant à la corrosion par des produits chimiques transportés.

En effet, dans ce cas, l'extraction du mandrin à la fin de l'étape de chauffage destinée à réaliser la gélification de la résine ne pose pas de problème particulier. Il suffit dans ce cas d'exercer une traction en prenant appui sur l'extrémité du tube après avoir le cas échéant légèrement chauffé le tube pour le dilater.

Il est par contre nécessaire, pour certaines applications, par exemple pour des gaines montées en faisceaux à l'intérieur d'échangeurs thermiques, de réaliser des tubes en résine fluorée, notamment en PTFE présentant une épaisseur plus faible, voire beaucoup plus faible que celle des tubes traditionnellement fabriqués par le procédé mentionné, par exemple des tubes de 1 à 2 mm d'épaisseur, ou même des tubes de un à quelques dizièmes de millimètres d'épaisseur.

Dans ce cas l'on constate, lors de la mise en oeuvre du procédé décrit, que l'extraction du mandrin par rapport au tube se révèle très délicate voire impossible sans endommager le tube.

En effet, lors de l'opération de chauffage préalable, le tube se rétreint fortement principalement selon son diamètre et il existe un effort de serrage important du tube sur le mandrin empêchant l'extraction.

La présente invention a pour objet un perfectionnement au procédé décrit précédemment, destiné à permettre notamment l'obtention de tubes de faible épaisseur, le procédé selon l'invention se caractérisant essentiellement par le fait qu'après l'étape consistant à refroidir le tube et le mandrin, et avant l'étape consistant à extraire le mandrin situé à l'intérieur du tube, on procède à un laminage du tube maintenu sur le mandrin.

L'étape de laminage selon l'invention peut être réalisée par tout moyen mécanique approprié apte à provoquer une légère diminution de l'épaisseur du tube en même temps qu'un léger allongement de celui-ci, et donc un gonflement de son diamètre intérieur.

De préférence, selon l'invention, on réalise le laminage de manière à provoquer une diminution d'épaisseur comprise entre 1 % et 3 % et un allongement dans les mêmes proportions et donc également compris entre 1 % et 3 %.

Dans un mode de réalisation préféré, l'opération de laminage est une opération de galetage utilisant en particulier un ensemble de trois galets motorisés, tournant dans le même sens, disposés autour du tube maintenu sur le mandrin et dont les axes sont inclinés d'un même angle, par exemple compris entre 3 et 15° respectivement par rapport à trois plans passant par l'axe du mandrin et formant entre eux des angles de 120° de manière que, lors de sa rotation, chaque galet roule sans glisser selon une zone de contact en hélice sur la périphérie du tube. Le tube maintenu sur le mandrin est simultanément entraîné axialement et en rotation par la rotation des galets.

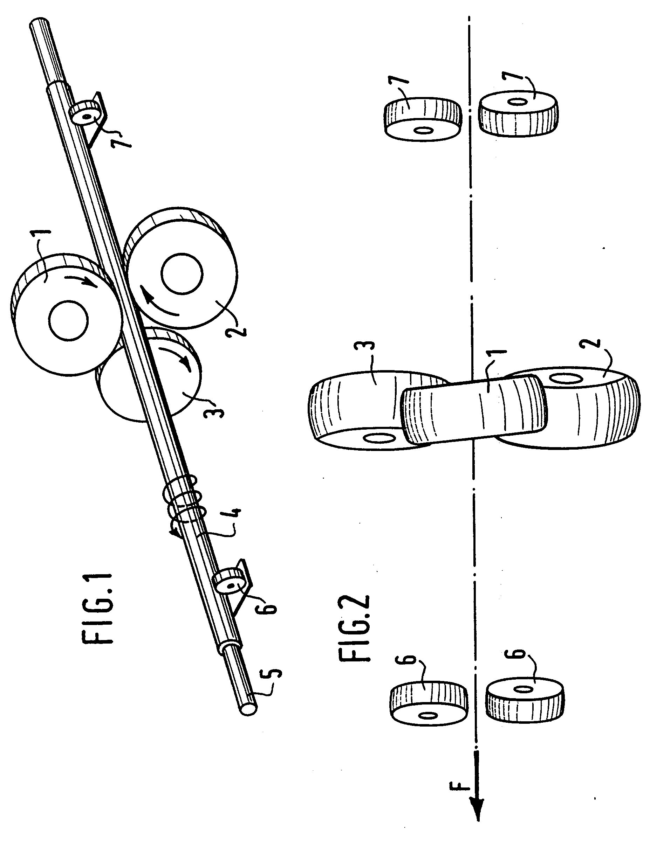

On a schématiquement illustré sur les figures 1 et 2 du dessin une installation, en perspective et respectivement vue de dessus, permettant de réaliser l'étape de laminage par un tel galetage hélicoïdal.

On a ainsi illustré sur le dessin trois galets 1, 2, 3 entraînés en rotation dans le même sens matérialisé par les flèches sur la figure 1 par des moyens moteurs non représentés.

Comme indiqué précédemment, cet ensemble de galets assure simultanément l'avance axiale (flèche F) et la rotation sur lui-même d'un tube 4 engagé sur un mandrin 5 tout en réalisant un laminage du tube.

Dans l'installation illustrée sur le dessin, il est prévu, de part et d'autre de l'ensemble de galets 1, 2, 3, des paires de rouleaux de guidage 6 et respectivement 7.

Bien entendu l'installation représentée n'est qu'un exemple parmi d'autres possibles pour réaliser l'étape de laminage selon l'invention.

Il est en particulier possible de prévoir des installations comportant des moyens séparés pour réaliser, d'une part le laminage proprement dit, et d'autre part l'avance du tube maintenu sur le mandrin.

On va maintenant décrire un exemple de tube réalisé selon l'invention.

### Exemple

On utilise une poudre vierge de PTFE possédant une granulométrie moyenne de 500 µm. On mélange cette poudre avec un lubrifiant isoparaffinique (ISOPAR) à raison de 20 % en poids de lubrifiant pour 80 % en poids de poudre.

On réalise une préforme en comprimant à une pression de 15 kg/cm², le mélange de poudre et de lubrifiant. Cette préforme qui se présente sous la forme d'un cylindre de 6 cm de long et 15 mm de diamètre est introduite dans une presse à extruder pour former un ruban présentant une épaisseur de 1 mm. Ce ruban a une densité de 1,5.

On procède au calandrage du ruban ainsi préparé de manière à obtenir un ruban présentant une épaisseur de 0,8 µm.

Le ruban est ensuite chauffé pour éliminer le lubrifiant.

Le ruban ainsi obtenu présente une densité de 1,6 et est alors découpé à la largeur voulue.

On procède à l'enroulement du ruban de 40 mm de large ainsi obtenu sur un mandrin ayant un diamètre de 40 mm avec un pas de 20 mm.

On réalise ainsi à chaque parcours d'enroulement une superposition de 2 couches de ruban. On procède à la mise en place de 7 couches de spires, de manière à former un tube d'une épaisseur de 1,1 mm avant frittage.

Après avoir procédé à cet enroulement, on porte le mandrin et son revêtement de ruban en PTFE dans un four à 360°C. Cette température est maintenue pendant 1 heure, après quoi, on procède à un refroidissement rapide jusqu'à la température ambiante.

Le tube présente à ce stade une épaisseur de 0,82 mm et une densité de 2,15.

On procède alors à un laminage du tube dans l'installation illustrée sur le dessin, de manière à ramener l'épaisseur du tube à 0,81 mm en réalisant un allongement de 1,25 % le diamètre intérieur du tube passe de 40 mm à 40,5 mm.

On procède ensuite à l'extraction du mandrin qui s'effectue sans la moindre difficulté et sans aucunement endommager le tube.

Bien que l'invention ait été décrite en liaison avec un mode de réalisation particulier, il est bien évident qu'elle n'y est nullement limitée et qu'on peut lui apporter différentes variantes et modifications sans pour autant sortir de son cadre défini par les revendications.

## Revendications

1. Procédé pour la fabrication de tubes en résine fluorée, notamment en polytétrafluoréthylène, de faible épaisseur, dans lequel on enroule sur un mandrin (5) un ruban de résine fluorée, notamment le polytétrafluoréthylène, cru, obtenu notamment par extrusion lubrifiée et calandrage, l'enroulement du ruban étant effectué selon une pluralité de couches, on porte le ruban ainsi enroulé sur le mandrin à une température supérieure à la température de gélification de la résine fluorée pendant un temps suffisant pour provoquer la gélification, on refroidit le tube (4) et le mandrin (5) et on extrait le mandrin situé à l'intérieur du tube, caractérisé par le fait qu'après l'étape consistant à refroidir le tube (4) et le mandrin (5), et avant l'étape consistant à extraire le mandrin situé à l'intérieur du tube, on procède à un laminage du tube maintenu sur le mandrin.

2. Procédé selon la revendication 1, caractérisé par le fait que l'on effectue le laminage de manière à provoquer une diminution d'épaisseur du tube comprise entre 1 % et 3 % et un allongement également compris entre 1 % et 3 %.

3. Procédé selon l'une quelconque des revendications 1 et 2, caractérisé par le fait que le laminage est effectué par galetage.

4. Procédé selon la revendication 3, caractérisé par le fait que l'on utilise un ensemble de galets motorisés (1, 2, 3) agencés pour provoquer simultanément un laminage, une avance et une rotation du tube (4) maintenu sur le mandrin (5).

## Claims

1. Method for the production of tubes of fluorinated resin, in particular polytetrafluoroethylene, of a small thickness, wherein one winds up on a mandrel (5) a tape of unsintered fluorinated resin, in particular polytetrafluoroethylene, which is obtained in particular by lubricated extrusion and calendering, the winding up of the tape being effected along a plurality of layers, the tape thus wound up on the mandrel is brought to a temperature higher than the gelling temperature of the fluorinated resin for a time that is sufficient to produce the gelling, the tube (4) and the mandrel (5) are cooled, and the mandrel situated inside the tube is extracted, characterized in that after the step constitued by the cooling of the tube (4) and of the mandrel (5), and before the steps constituted by extracting the mandrel situated inside the tube, one proceeds with a rolling of the tube held on the mandrel.

2. Method according to claim 1, characterized in that the rolling is effected so as to produce a reduction in the thickness of the tube comprised between 1 % and 3 % and an elongation also comprised between 1 % and 3 %.

3. Method according to either of claims 1 and 2, characterized in that the rolling is effected using rollers.

4. Method according to claims 3, characterized in that a set of motorized rollers (1, 2, 3) is used which are arranged so as to produce simultaneously a rolling operation, an advance and a rotation of the tube (4) held on the mandrel (5).

## Patentansprüche

1. Verfahren zur Herstellung von Röhren mit geringer Wandstärke aus einem fluorierten Harz, insbesondere aus Polytetrafluorethylen, durch Aufwickeln auf einen Kern (5) eines Bandes aus ungesintertem fluoriertem Harz, insbesondere aus Polytetrafluorethylen, welches insbesondere durch Extrusion in Gegenwart eines Gleitmittels und Kalandrieren hergestellt worden ist, wobei das Band in einer Vielzahl von Lagen aufgewickelt wird, Erhitzen des in dieser Weise auf den Kern aufgewickelten Bandes auf eine Temperatur oberhalb der Gelbildungstemperatur des fluorierten Harzes wahrend einer Zeitdauer, die dazu ausreicht, die Gelbildung zu bewirken, Abkühlen des Rohres (4) und des Kerns (5) und Herausziehen des Kerns aus dem Inneren des Rohres, dadurch gekennzeichnet, dass nach dem Schritt des Abkühlens des Rohres (4) und des Kerns (5) und vor dem Herausziehen des Kerns aus dem Inneren des Rohres, das auf dem Kern vorliegende Rohr einer Walzbehandlung unterworfen wird.

2. Verfahren nach Anspruch 1, dadurdh gekennzeichnet, dass die Walzbehandlung in der Weise erfolgt, dass eine Verminderung der Wandstärke der Rohres zwischen 1% und 3% und eine Verlängerung des Rohres zwischen 1% und 3% bewirkt werden.

3. Verfahren nach einem der Ansprüche 1 und 2, dadurch gekennzeichnet, dass die Walzbehandlung durch Glattwalzen bewirkt wird.

4. Verfahren nach Anspruch 3, dadurch gekennzeichnet, dass man eine Gruppe von angetriebenen Walzen (1,2,3) verwendet, die derart angeordnet sind, dass sie gleichzeitig das Walzen, eine Vorwärtsbewegung und eine Rotation des auf dem Kern (5) vorliegenden Rohres (4) bewirken.
